# DEMANDE DE BREVET EUROPEEN

(11) **EP 4 793 017 A1**
(43) Date de publication de la demande: **19.08.2026**
(21) Numéro de dépôt: 26158310.8
(22) Date de dépôt: 12.02.2026
(51) Int. Cl.: B29C 45/26, B29C 45/37, B29C 33/38

(54) **DISPOSITIF DE MOULAGE PAR INJECTION, INSERT ET PROCÉDÉ DE FABRICATION ASSOCIÉS**

(30) Priorité: 17.02.2025 FR 2501651
(71) Demandeur: SILSEF, 74160 Archamps (FR)
(72) Inventeur: TUROVER, Daniel, 74160 ARCHAMPS (FR); GÂTÉ, Valentin, 74160 ARCHAMPS (FR)
(74) Mandataire: Innovincia

(57) **Abrégé**

La présente invention concerne un insert (1) pour dispositif de moulage par injection pour la fabrication de pièces en matériau polymérique comprenant :
- une première partie (3) réalisée en matériau métallique comprenant une cavité (3a),
- une deuxième partie (9) réalisée en résine thermodurcissable configurée pour être positionnée dans la cavité (3a) de la première partie (3) et en contact avec un fond de la cavité (3),
- une troisième partie (11) configurée pour venir se positionner dans la cavité (3a) de la première partie (3) et sur la deuxième partie (9), ladite troisième partie (11) comprenant une surface de moulage comprenant un motif de texturation et étant réalisée dans l'un des matériaux suivants :
- une résine thermodurcissable présentant un taux de retrait inférieur à celui de la résine thermodurcissable de la deuxième partie (9) ou,
- un matériau céramique.

## Description

La présente invention concerne les inserts de moule et les moules destinés aux procédés de moulage par injection de pièces en matériau polymérique, tels que les polymères thermoplastiques et thermodurcissables, qui présentent une surface structurée, de préférence nano-structurée, ainsi que leur procédé de fabrication.

Ces inserts de moule et ces moules comportent une surface structurée (ou autrement dit un motif de texturation), de préférence nano-structurée, qui est le négatif de la surface structurée de la pièce obtenue par injection.

Les matériaux polymériques sont largement utilisés pour fabriquer des biens de consommation dans des domaines très variés tels que ceux par exemple du conditionnement, de l'automobile ou encore des dispositifs médicaux. En effet, l'utilisation des matériaux polymériques dans la fabrication de ces biens de consommation présente les avantages de pouvoir les produire en très grandes quantités et à faible coût selon des procédés classiques de la plasturgie.

L'un de ces procédés consiste en un moulage par injection au cours duquel on met en œuvre la fusion du matériau polymérique dans un moule. Ces dernières années, on a aussi recherché à incorporer des motifs de texturation à l'échelle micrométrique, voire même nanométrique, à la surface de ces objets qui sont fabriqués en matériau polymérique. L'intérêt de cette texturation est de fonctionnaliser la surface des objets, notamment pour obtenir des effets optiques tels que la diffusion, l'anti-reflets, la diffraction ou des effets tribologiques tels que l'effet anti-traces de doigt, l'anti-adhésion ou encore la modification de la tension de surface.

Une telle texturation peut être obtenue par la gravure (chimique ou par électroérosion ou par laser) d'un moule métallique, notamment en acier.

Cependant, une telle gravure permet difficilement d'obtenir des nano-structures et présente un coût important qui nécessite une fabrication en grande série pour être rentabilisée.

Par ailleurs, un moule en acier présente l'inconvénient de réagir à la montée en température dans la seconde où le matériau polymérique en fusion a été injecté. En effet, le moule en acier emmagasine immédiatement la chaleur du matériau polymérique en fusion qui est injecté de telle sorte qu'une faible couche en surface de ce matériau polymérique se fige avant même que ledit matériau polymérique n'ait rempli les cavités à l'échelle, par exemple nanométrique, du moule en acier.

Ce phénomène de figement du matériau polymérique lors de son injection est connu sous la dénomination « d'effet de peau » (ou selon la dénomination anglophone : « skin effect »).

La demande US 2011/0123711 Al a tenté de surmonter cet inconvénient « d'effet de peau » qui se produit inévitablement avec un moule en acier en proposant un procédé de fabrication d'un moule hybride qui comprend une couche de polymère thermoplastique ou thermodurcissable présentant un motif de texturation dont les dimensions sont comprises entre 0,01 µm et 100 µm et la hauteur est comprise entre 0,01 µm et 800 µm, ladite couche de polymère est recouverte d'un dépôt métallique dont l'épaisseur est comprise entre 0,5 µm et 500 µm.

Cependant, le procédé de fabrication décrit dans la demande US 2011/0123711 Al présente les inconvénients suivants : Il est limité à la fabrication de surfaces de moulage à deux dimensions, à savoir du type plaque. Il ne permet donc pas la réalisation de surfaces de moulage à 2,5 dimensions (à savoir des surfaces arrondies) et 3 dimensions (à savoir des sphères ou formes gauches). Il est compliqué à mettre en œuvre, car il nécessite notamment une étape de matriçage et une étape de dépôt d'une couche métallique. Lorsque le polymère utilisé pour la fabrication de ce moule hybride est un polymère thermoplastique, c'est-à-dire un matériau isolant avec une forte capacité calorifique, cela ne permet pas le moulage dans des conditions industrielles de pièces en matériau polymérique avec une surface comportant des motifs de texturation fines. En effet, l'accumulation de chaleur au cours de l'injection du matériau polymérique en fusion peut engendrer un effet « bilame » important si la partie du moule opposée (à savoir le contre-moule) à celle qui comporte les motifs nano-structurés est réalisée en acier ; ce qui est généralement le cas dans les dispositifs de moulage par injection.

Les intérêts que la deuxième partie du moule (autrement dit « le contre-moule ») soit en acier est de garantir un meilleur plan de joints pour éviter des phénomènes de bavure et d'allonger sa durée d'utilisation. L'effet bilame a pour conséquence néfaste de déformer la pièce moulée en matériau polymérique. Il présente une durée de vie limitée, d'environ 1000 cycles d'injection pour l'obtention de pièces en matériau polymérique.

La présente invention vise donc à surmonter les inconvénients précités de l'état de la technique et à fournir un moule d'injection et un insert associé permettant d'obtenir des pièces en matériau polymérique nano-structurées ou micro-structurées et dont le coût de fabrication est réduit. Plus particulièrement, les inventeurs de la présente invention ont cherché à mettre au point des moules et des inserts de moule dont l'utilisation au cours d'un moulage par injection évite que l'effet bilame mentionné ci-dessus ne se produise, et ce tout en ne nécessitant pas de ralentir les cadences de moulage par injection avec la mise en œuvre d'étapes de refroidissement relativement longues et fastidieuses.

A cet effet, la présente invention concerne un insert pour dispositif de moulage par injection pour la fabrication de pièces en matériau polymérique comprenant:
- une première partie réalisée en matériau métallique comprenant une cavité,
- une deuxième partie réalisée en résine thermodurcissable configurée pour être positionnée dans la cavité de la première partie et en contact avec un fond de la cavité,
- une troisième partie configurée pour venir se positionner dans la cavité de la première partie et sur la deuxième partie, ladite troisième partie comprenant une surface de moulage comprenant un motif de texturation et étant réalisée dans l'un des matériaux suivants :
- une résine thermodurcissable présentant un taux de retrait inférieur à celui de la résine thermodurcissable de la deuxième partie ou,
- un matériau céramique..

L'utilisation d'un insert comprenant trois parties telles que décrites ci-dessus permet de reproduire fidèlement des motifs de taille réduite (micro-motifs ou nano-motifs) en évitant l'effet de peau. Cela permet également de refroidir la matière injectée par l'utilisation d'un socle métallique, notamment en aluminium, ce qui permet d'évacuer efficacement la chaleur et ainsi obtenir des motifs avec un rapport de forme supérieur à 2 avec un temps de cycle raisonnable car la matière peut fluer dans les motifs du fait de l'absence d'effet de peau et peut être démoulée sans se déformer du fait d'un refroidissement pas trop rapide (et qui permet donc une déformation élastique au démoulage) grâce à la seconde couche en résine qui procure un tampon thermique par rapport à la première partie métallique.

Selon un autre aspect de la présente invention, le motif de texturation comprend des microstructures ou nanostructures.

Selon un autre aspect de la présente invention, la troisième partie est réalisée en matériaux hybrides organiques-inorganiques, notamment en matériau hybrides sol-gel ou en silsesquioxane (RSiO_{3/2}).

Selon un autre aspect de la présente invention, le matériau hybride sol-gel est obtenu à partir de précurseurs pris seuls ou en mélanges parmi la liste suivante :
- zirconium tetra-n-butanolate,
- zirconium butoxyde,
- bisopropyl titanate,
- tri- (3-(trimethoxysilyl)propyl)isocyanurate,
- gamma-methacryloxypropyltrimethoxysilane,
- n-phenyl-gamma-aminopropyltrimethoxysilane,
- orthosilicate de tétraéthyle (TEOS),
tetra isopropyl titanate (TIPT).

Selon un autre aspect de la présente invention, la résine thermodurcissable de la deuxième partie et l'éventuelle résine thermodurcissable de la troisième partie ont une température de transition vitreuse supérieure ou égale à 150°C.

Selon un autre aspect de la présente invention, la résine thermodurcissable de la deuxième partie est une résine époxy.

Selon un autre aspect de la présente invention, le fond de la cavité de la première partie comprend des plots configurés pour solidariser la première partie et la deuxième partie par accroche mécanique et pour maximiser la surface d'échange thermique entre la première partie et la deuxième partie.

La présente invention concerne également un dispositif de moulage par injection de pièces en matériau polymérique comprenant un insert tel que décrit précédemment et un moule configuré pour recevoir, au moins un, tel insert.

Selon un autre aspect de la présente invention, le dispositif de moulage comprend également un dispositif de refroidissement de l'insert configuré pour transférer de la chaleur en dehors de l'insert.

La présente invention concerne également un procédé de fabrication d'un insert tel que décrit précédemment comprenant les étapes suivantes :
- on coule une résine thermodurcissable dans une cavité d'un support métallique,
- on réticule la résine thermodurcissable,
- on coule une couche de matériau hybride sol-gel sur la résine thermodurcissable réticulée,
- on applique un outil de texturation comprenant des microstructures ou nanostructures sur une surface supérieure de la couche de matériau hybride sol-gel,
- on réticule la couche de matériau hybride sol-gel.

Selon un autre aspect de la présente invention, les étapes de réticulation sont réalisées par voie thermique ou par photopolymérisation.

La présente invention concerne également un procédé de fabrication d'une pièce en matériau polymérique comprenant les étapes suivantes :
- une étape de fourniture d'un dispositif de moulage tel que décrit précédemment,
- une étape d'injection de matériau polymérique dans une cavité du dispositif de moulage comprenant un insert tel que décrit précédemment,
- une étape de refroidissement du polymère injecté,
- une étape de démoulage ou d'éjection de la pièce en matériau polymérique.

Selon un autre aspect de la présente invention, la pièce en matériau polymérique est comprise dans la liste suivante :
- un dispositif optique,
- une métasurface,
- un circuit de microfluidique,
- un hologramme.

D'autres caractéristiques et avantages de l'invention apparaîtront plus clairement à la lecture de la description suivante, donnée à titre d'exemple illustratif et non limitatif, et des dessins annexés parmi lesquels :
[Fig.1] représente une vue schématique en coupe d'un insert selon un mode de réalisation de la présente invention;
[Fig.2] représente un organigramme des étapes de fabrication de l'insert de la figure 1;
[Fig.3] représente une vue en coupe de la première partie de l'insert de la figure 1 ;
[Fig.4] représente une vue en coupe de la première partie et de la deuxième partie de l'insert de la figure 1;
[Fig.5] représente une étape de texturation d'une troisième partie de l'insert de la figure 1;
[Fig.6] représente une étape de texturation d'une troisième partie de l'insert de la figure 1;
[Fig.7] représente une vue schématique d'un dispositif de moulage selon un mode de réalisation de la présente invention;
[Fig.8] représente une vue schématique d'un dispositif de moulage selon un mode de réalisation de la présente invention durant une étape d'injection;
[Fig.9] représente une vue schématique d'un dispositif de moulage selon un mode de réalisation de la présente invention durant une étape d'injection;
[Fig.10] représente une vue schématique d'un dispositif de moulage selon un mode de réalisation de la présente invention durant une étape de démoulage;
[Fig.11] représente une vue schématique d'un insert selon un mode de réalisation de la présente invention durant une étape de démoulage;
[Fig.12] représente un organigramme des étapes de fabrication d'une pièce en matériau polymérique utilisant le dispositif de moulage de la figure 7.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans le cadre de la présente invention, on entend par « surface nano- structurée », aussi connue sous la dénomination anglo-saxone « nano-patterned surface », une surface présentant au moins un motif défini par des zones en relief et des zones en creux et dont les dimensions de ces zones (largeur, hauteur, pas) sont d'ordre nanométrique, par exemple jusqu'à quelques centaines de nanomètres. De façon similaire, une surface micro-structurée signifie que la surface présente au moins un motif défini par des zones en relief et des zones en creux et dont les dimensions de ces zones (largeur, hauteur, pas) sont d'ordre micrométrique, par exemple jusqu'à quelques centaines de micromètres.

Par « matériau hybride sol-gel », on entend une résine qui a été obtenue selon un procédé sol-gel, à savoir un procédé produisant un polymère inorganique vitreux par des réactions chimiques simples à partir de précurseurs en solution, à une température proche de la température ambiante (environ 20°C) et n'excédant pas 150 °C. Les précurseurs en solution de ces résines sol-gel peuvent être choisis parmi le zirconium tetra-n-butanolate, le zirconium butoxyde, isopropyl titanate, tri- (3-(trimethoxysilyl)propyl)isocyanurate, gamma-methacryloxypropyltrimethoxysilane, n-phenyl-gamma-aminopropyltrimethoxysilane, pris seuls ou en mélanges. Par exemple, la résine sol-gel peut être une résine acrylique modifiée par des nanoparticules de dioxyde de silicium qui a été obtenue par un procédé sol-gel.

Par « matériau hybride», on entend des réseaux de polymères composés d'une matrice organique (par exemple un polyméthacrylate de méthyle) et d'une matrice inorganique comprenant, par exemple, de la silice, du titane, du zirconium ou du zinc. Un exemple de matériau hybride est la résine commercialisée sous la dénomination commerciale ORMOCER^{®} par la société Micro Resist Technology GmbH.

La présente invention concerne un insert pour le moulage par injection de pièces en matériau polymérique.

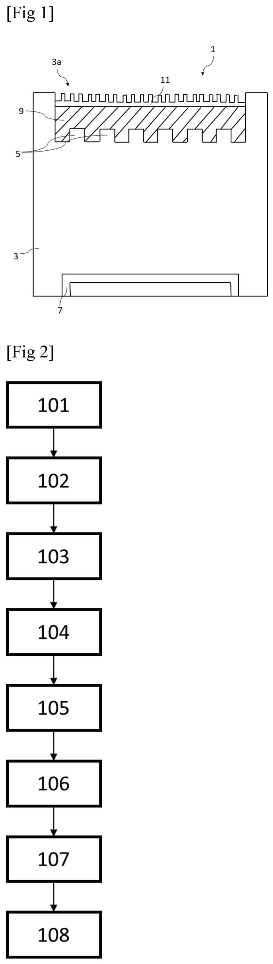

La figure 1 représente une vue schématique en coupe d'un tel insert 1 comprenant une première partie 3, une deuxième partie 9 et une troisième partie 11.

### Première partie

L'insert 1 comprend une première partie 3 réalisée en matériau métallique, par exemple en acier. De préférence, le matériau métallique a une forte conductivité thermique, à savoir qu'elle est d'au moins 150W/mK, et de préférence d'au moins 200 W/mK. Le matériau métallique peut être choisi parmi l'aluminium, le cuivre, l'argent, l'or et le béryllium, pris seuls ou en alliage. Par exemple, il peut s'agir d'un alliage de cuivre et de béryllium. La première partie 3 est par exemple réalisée à partir d'un bloc métallique qui est usiné. Alternativement, la première partie peut être obtenue par fabrication additive (aussi appelée impression en trois dimensions (impression 3D)).

La première partie 3 comprend une cavité 3a ménagée dans une zone supérieure du bloc métallique (la direction supérieure est donnée par rapport à l'orientation de l'insert 1 sur la figure 1 mais l'insert 1 peut être utilisé avec d'autres orientations). La cavité 3a est par exemple obtenue par enlèvement de matière, tel que par usinage du bloc métallique. La cavité 3a s'étend par exemple sur au moins 60% d'une surface supérieure du bloc métallique. La profondeur de la cavité est par exemple comprise entre 1 mm et 100 mm, par exemple 10 mm.

Des plots 5 peuvent également être ménagés sur le fond de la cavité 3a. Ces plots 5 ont un diamètre compris entre 0,5 mm et 15 mm, par exemple 3 mm. La hauteur de ces plots 5 est par exemple comprise entre 1 mm et 15 mm, par exemple 2 mm. Les plots 5 permettent d'obtenir une plus grande surface de contact entre la première partie 3 et la deuxième partie 9 ce qui maximise les échanges thermiques d'une part et améliore l'adhésion entre la première partie 3 et la deuxième partie 9 d'autre part.

La première partie 3 peut également comprendre un canal 7 ou des canaux 7 de circulation d'un fluide caloporteur configurés pour être reliés à un dispositif de refroidissement de la première partie 3. Le canal 7 ou les canaux 7 sont par exemple ménagés dans une zone inférieure de la première partie 3, c'est-à-dire une zone opposée à la zone supérieure comprenant la cavité 3a.

### Deuxième partie

L'insert 1 comprend également une deuxième partie 9 configurée pour être positionnée dans la cavité 3a de la première partie 3. La deuxième partie 9 est configurée pour s'étendre en contact avec le fond de la cavité 3a et notamment en contact avec les plots 5 lorsque ceux-ci sont présents. Les plots 5 permettent à la fois un transfert thermique amélioré entre la première partie 3 et la deuxième partie 9 et une accroche mécanique pour solidariser la deuxième partie 9 et la première partie 3.

La deuxième partie 9 est réalisée en résine thermodurcissable. La résine thermodurcissable a par exemple une température de transition vitreuse supérieure ou égale à 150°C. La résine thermodurcissable de la deuxième partie 9 peut être choisie parmi les résines époxy, polyuréthane, polyester, vinylester, phénolique, bis-maleimide ; les résines thermoplastiques telles que le polycarbonate du bisphénol A, le polyéthercétone, le polyaryléthercétone, le polytéréphtalate de bisphénol A, le polysulfone, le polyphénylsulfone, le poly-2,6-diméthyloxyde de phénylène, le polyétherimide, le polyéthersulfone, le polyamide-imide et le polypyromellitimide

L'épaisseur de la deuxième partie 9 est par exemple compris entre 1mm et 10cm.

La résine thermodurcissable de la deuxième partie 9 peut être chargée. Les charges peuvent être choisies parmi : les charges minérales telles que le carbonate de calcium et/ou de magnésium, les silices et les sulfates, les charges métalliques telles que l'aluminium, le cuivre et le fer. Les charges détaillées ci-dessus peuvent être prises seules ou en mélanges. Par exemple, la résine peut comprendre un mélange de charges métalliques et de charges minérales. Lorsque la résine comprend des charges métalliques, il s'agit avantageusement de charges sous forme de poudre avec une granulométrie inférieure à 100 µm, plus préférentiellement d'une dizaine de micromètres. La résine est par exemple une résine thermodurcissable comprenant des charges métalliques. Par exemple, il s'agit du système RenCast ^{®} CW 47/ Ren ^{®} HY 33 commercialisé par la société HUNTSMAN. Le pourcentage massique de charges dans la résine est par exemple compris entre 30% et 70%. Le fait que la résine comprenne des charges améliore la tenue mécanique de la deuxième partie 9 de l'insert 1. Par amélioration de la tenue mécanique, on entend que la deuxième partie 9 de l'insert 1 est plus résistante à la compression, aux chocs et au fluage. De manière avantageuse, la résine de la deuxième partie 9 de l'insert 1 présente une excellente tenue thermique, de préférence supérieure 200°C, encore plus préférentiellement supérieure à 210°C, en ce qui concerne la température de fléchissement sous charge mesurée selon la norme ISO 75. Par excellente tenue thermique de la résine, on entend que la résine dont est constituée la deuxième partie 9 de l'insert 1 selon l'invention ne se dégrade nullement aux températures d'utilisation de l'insert 1, à savoir au cours d'un procédé de moulage par injection.

La résine thermodurcissable de la deuxième partie 9 a avantageusement une conductivité thermique inférieure à 2 W/mK, de préférence d'environ 1 W/mK (par exemple 1,17 W/mK). Lorsque la résine comprend des charges, les charges étant diluées dans la résine, elles ne modifient pas la conductivité de la résine, et ce même s'il s'agit de charges métalliques.

### Troisième partie

L'insert 1 comprend également une troisième partie 11 configurée pour être positionnée dans la cavité 3a et s'étendre sur la deuxième partie 9. La troisième partie 11 comprend une surface supérieure de moulage comprenant un motif de texturation. Le motif de texturation comprend des nano-structures ou microstructures. Par exemple, la hauteur du motif peut être comprise entre 0,01 micromètre et 100 micromètres, la largeur du motif peut être comprise entre 0,01 micromètre et 100 micromètres et l'espacement entre chaque motif peut être compris entre 0,01 micromètre et 100 micromètres. La forme des motifs de texturation peut varier en fonction des besoins. L'épaisseur de la troisième partie est par exemple de quelques centaines de nanomètres, notamment 300nm.

### - Premier mode de réalisation

Selon un premier mode de réalisation, la troisième partie 11 est réalisée par une résine thermodurcissable dont le taux de retrait est inférieur à celui de la résine de la deuxième partie 9. Le taux de retrait peut être défini par la perte de dimension du matériau durant la réticulation. En effet, lors de la réticulation, la résine thermodurcissable va se contracter selon au moins l'une de ses dimensions en durcissant. Un taux de retrait inférieur permet de mieux répliquer les microstructures ou nanostructures d'un outil de texturation. Un taux de retrait inférieur est par exemple obtenu par une résine thermodurcissable dont la réticulation est réalisée par photo-polymérisation ou photo-réticulation, par exemple via l'application de rayons ultra-violets (UVs).

La résine de la troisième partie 11 peut être une résine organique, une résine inorganique ou une résine hybride comprenant des composés organiques et des composés inorganiques.

Comme la résine de la deuxième partie 9, la résine de la troisième partie 11 présente avantageusement une excellente tenue thermique pour des températures dépassant les 200°C.

Une excellente tenue thermique de la résine de la deuxième partie 9 et de la résine de la troisième partie 11 permet de disposer d'un insert 1 qui est parfaitement approprié pour le moulage par injection de la plupart des matériaux polymériques qui sont couramment utilisés en plasturgie, voire même du polycarbonate qui est une matière plus délicate à injecter. En effet, si l'on moule par injection du polycarbonate qui a une température de transition vitreuse d'environ 150°C, il est nécessaire que le moule soit réalisé en un matériau dont la température de transition vitreuse est égale ou supérieure à 150°C, sinon l'insert 1 pourra être dégradé au cours de l'injection. Dans un mode de réalisation de l'invention, la résine de la deuxième partie 9 et la résine de la troisième partie 11 ont une température de transition vitreuse égale ou supérieure à 150°C. Ainsi, l'insert 1 présente l'avantage d'être destiné au moulage par injection de matériaux polymériques très divers. Par exemple, ces matériaux polymériques peuvent être choisis parmi les polycarbonates, les styréniques, les polyoléfines, les polyamides, les polyvinyles, les thermoplastiques élastomères et les silicones.

Selon un mode de réalisation particulier, la troisième partie 11 est réalisée en matériau hybride sol-gel. Le matériau hybride sol-gel est par exemple obtenu à partir de précurseurs pris seuls ou en mélanges parmi la liste suivante :
- zirconium tetra-n-butanolate,
- zirconium butoxyde,
- bisopropyl titanate,
- tri- (3-(trimethoxysilyl)propyl)isocyanurate,
- gamma-methacryloxypropyltrimethoxysilane,
- n-phenyl-gamma-aminopropyltrimethoxysilane.

Selon un autre mode de réalisation particulier, la troisième partie 11 est réalisée en silsesquioxane (RSiO_{3/2}).

Selon un mode de réalisation particulier, la troisième partie 11 réalisée en résine thermodurcissable comprend un dépôt métallique de surface. Le dépôt métallique de surface est par exemple réalisé par l'un des procédés suivants :

- dépôt physique par phase vapeur (« Physical Vapor Deposition (PVD) » en anglais),
- dépôt chimique en phase vapeur (« Chemical Vapor Deposition (CVD) » en anglais),
- dépôt chimique par flux alternés (« Atomic Layer Deposition (ALD) » en anglais),
- évaporation thermique,
- évaporation par flux d'électrons.

### - Deuxième mode de réalisation

Selon un deuxième mode de réalisation, la troisième partie 11 est réalisée par une céramique. La céramique peut être un nitrure par exemple du nitrure de titane (TiN), un carbure par exemple du carbure de tungstène (WC), du carbone sous forme diamant ou sous hybridation sp2/sp3, aussi appelé Diamond Like Carbon (DLC), un oxyde par exemple de l'oxyde de silice (SiO₂) de l'oxyde de titane (TiO₂) ou de l'oxyde de ziconium (ZrO₂), un oxynitrure, un oxycarbure ou un carbonitrure.

La céramique peut être déposée sur la résine de la deuxième couche 9 selon l'un des procédés suivants :
- dépôt physique par phase vapeur (« Physical Vapor Deposition (PVD) » en anglais),
- dépôt chimique en phase vapeur (« Chemical Vapor Deposition (CVD) » en anglais),
- dépôt chimique par flux alternés (« Atomic Layer Deposition (ALD) » en anglais),
- évaporation thermique,
- évaporation par flux d'électrons.

Selon un mode de réalisation particulier, la troisième partie 11 réalisée en matériau céramique comprend un dépôt métallique de surface. Le dépôt métallique de surface est par exemple réalisé par un procédé de type LIGA (« Röntgenlithographie, Galvanoformung, Abformung » en allemand) ou tout autre procédé connu de l'homme du métier.

L'insert 1 peut présenter une forme générale parallélépipédique. Par exemple, son épaisseur peut être comprise entre 3 mm et 100 mm, de préférence entre 10 et 20 mm, sa longueur et sa largeur peuvent être comprises entre 10 mm et 500 mm, de préférence entre 20mm et 80mm.

Comme cela sera décrit plus en détails dans la suite de la description, lors d'un procédé de moulage par injection, le matériau polymérique en fusion est injecté sur la troisième partie 11 comprenant le motif de texturation. L'utilisation d'une troisième partie 11 selon l'un des matériaux décrit précédemment permet d'obtenir un motif de texturation de taille nanométrique.

### Dispositif de moulage

La présente invention concerne également un dispositif de moulage 10 comprenant un insert 1 tel que décrit précédemment.

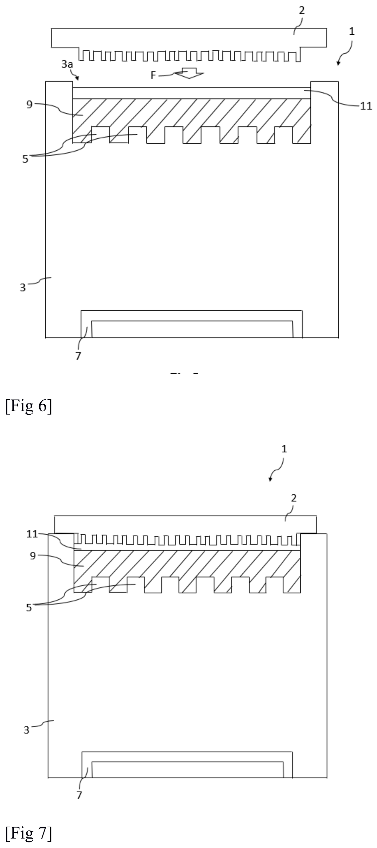

La figure 7 représente une vue schématique d'un tel dispositif de moulage 10.

Le dispositif de moulage 10 comprend une moule 12 comprenant un logement 12a configuré pour recevoir l'insert 1. Le moule 12 peut également comprendre des canaux de refroidissement 12b configurés pour être en communication fluidique avec le ou les canaux 7 de la première partie 3 de l'insert 1.

Le dispositif de moulage 10 peut comprendre un dispositif de refroidissement 13 de l'insert 1. Le dispositif de refroidissement 13 comprend par exemple un réservoir 16 de fluide caloporteur, par exemple de l'eau glycolée, et un dispositif de pompage 18 configurée pour faire circuler le fluide caloporteur dans le ou les canaux de refroidissement 7 de la première partie 3 de l'insert 1. Pour cela, des tuyaux 20 permettent par exemple de relier le réservoir 16, le dispositif de pompage et les canaux de refroidissement 12b. La taille des canaux de refroidissement 7 et le débit du fluide caloporteur peuvent être ajustés en fonction de la vitesse de refroidissement désirée pour l'insert 1.

Le dispositif de moulage 10 comprend également un contre-moule 14 configuré pour être assemblé au moule 12 lors de l'injection. Le contre-moule 14 est configuré pour venir en regard du logement 12a. Le contre-moule 14 comprend une cavité 14a disposée en regard du logement 12a configurée pour recevoir le polymère fondu lors de l'injection. Le contre-moule 14 peut également comprendre un dispositif d'éjection 22 pour permettre la libération de la pièce en polymère à la fin du procédé d'injection. Le dispositif d'éjection 22 comprend par exemple un piston configuré pour faire saillie dans la cavité 14a de manière à pousser la pièce en matériau polymérique hors de la cavité 14a. Le moule 12 et le contre-moule 14 peuvent être réalisés dans le même matériau, par exemple en acier.

Le dispositif de moulage 10 comprend également un dispositif d'alimentation de polymère fondu 24. Le dispositif d'alimentation 24 comprend par exemple une trémie 26 configurée pour recevoir le matériau polymérique. Le dispositif d'alimentation 24 comprend également des moyens de chauffage du matériau polymérique configuré pour chauffer le matériau polymérique pour obtenir un polymère fondu prêt à l'injection. Le dispositif d'alimentation 24 peut également comprendre un piston 28 et une buse d'injection 30 configurée pour venir en contact avec un canal d'alimentation 32 du moule 12. Dans le présent exemple, le canal d'alimentation 32 est en partie formé par l'assemblage du moule 12 et du contre-moule 14.

La présente invention concerne également un procédé de fabrication d'un insert 1 selon le premier mode de réalisation présenté précédemment.

La figure 2 représente un organigramme des étapes du procédé de fabrication.

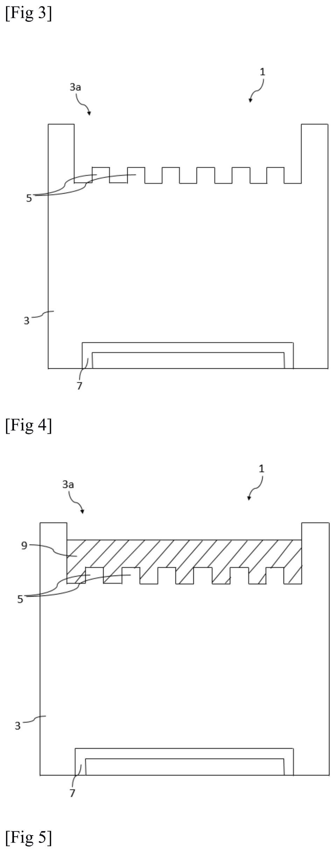

La première étape 101 concerne une étape de fourniture d'un support métallique formant la première partie 3 de l'insert 1. La figure 3 représente un exemple de réalisation d'un tel support métallique 3. Le support métallique 3 comprend une cavité 3a sur une face supérieure du support métallique 3. Le support métallique 3 peut également comprendre des plots 5 ménagés dans le fond de la cavité 3a. Le support métallique 3 peut également comprendre un ou plusieurs canaux 7 de refroidissement permettant la circulation d'un fluide caloporteur dans sa partie inférieure. Le support métallique 3 est par exemple obtenu par usinage d'un bloc métallique. Alternativement, le support métallique 3 peut également être obtenu par un procédé de fabrication additive aussi appelée impression en trois dimensions dans lequel le support métallique 3 est obtenu par superposition de fines couches de matière fusionnées entre elles, par exemple via un faisceau laser.

La deuxième étape 102 concerne la fourniture d'un outil de texturation, par exemple un moule maître comportant une surface de moulage qui comprend au moins un motif de texturation. Ce motif de texturation peut présenter des dimensions de l'ordre du micromètre et/ou du nanomètre, par exemple quelques dizaines de nanomètre. Dans un mode de réalisation de l'invention, le moule maître est un moule en silicium, quartz, silice fondue, silicone, un matériau semi-conducteur, un oxyde métallique ou encore un nitrure métallique. De manière préférée, le moule maître est un moule en silicium qui présente l'avantage de réaliser des motifs de texturation à la surface de l'insert 1 en 2, 2,5 et 3 dimensions. La fabrication de l'insert 1 est donc aisément mise en œuvre, et ce à faible coût. L'insert 1 peut facilement être remplacé s'il devait être endommagé au cours de son utilisation lors d'un moulage par injection ou bien lors de toute manipulation malencontreuse de celui-ci (à savoir une détérioration accidentelle). De plus, il ne nécessite pas la réalisation d'étapes minutieuses et fastidieuses telles que le dépôt de couche fine métallique ou de gravure.

La troisième étape 103 concerne une étape dans laquelle on coule une résine thermodurcissable dans la cavité 3a du support métallique 3 fourni à l'étape 101 pour former la deuxième partie 9 de l'insert 1. La résine thermodurcissable 9 est coulée de manière à recouvrir les éventuels plots 5. L'épaisseur de la couche de résine thermodurcissable est par exemple comprise entre 1 mm et 10 mm. La résine thermodurcissable peut être chargée comme indiqué précédemment.

Avant l'étape de coulage 103, la résine a avantageusement été préparée en mélangeant, de préférence sous vide, ses différents constituants (à savoir la résine et le durcisseur) dans les proportions prescrites par le fabricant et laissée à dégazer pendant une durée suffisante de telle sorte que le mélange ne comporte plus de bulles. De manière préférée, on réalise l'étape de coulage de la résine sous vide. Cela présente l'avantage qu'un dégazage de la résine se poursuit pendant le coulage. Le coulage de la résine peut être effectué à température ambiante.

La quatrième étape 104 concerne une étape de réticulation de la résine thermodurcissable. La résine thermodurcissable est par exemple chauffée à une température comprise entre 50°C et 80°C ce qui permet de former des liaisons tridimensionnelles au sein de la résine. La figure 4 représente le résultat obtenu à l'issue de l'étape 104.

La réticulation peut être réalisée à pression atmosphérique.

La réticulation peut également être réalisée à température ambiante durant le temps prescrit par le fabricant, ou chauffée à une température préconisée et durant un temps préconisé par le fabricant pour favoriser sa réticulation. La réticulation de la résine peut être suivie d'un traitement thermique à plus haute température pour lui permettre une meilleure tenue en température. Dans un mode de réalisation, le coulage de la résine est effectué à une température d'environ 120°C et elle est durcie pendant environ 16 heures à 180°C.

Alternativement, la réticulation peut être réalisée par photo-réticulation, par exemple via l'application d'un rayonnement ultra-violet sur la résine.

La cinquième étape 105 concerne une étape dans laquelle on coule une couche de matériaux hybrides organiques-inorganiques, par exemple un matériau hybride sol-gel sur la résine thermodurcissable réticulée 9 formée à l'étape 104 pour former la troisième partie 11 de l'insert 1. L'épaisseur de la couche de matériau hybride sol-gel 11 est par exemple comprise entre 0,5µm et 1 mm.

La sixième étape 106 concerne l'application de l'outil de texturation 2 obtenu à l'étape 102, par exemple un contre-moule comprenant des microstructures et/ou nanostructures, sur une surface supérieure de la couche de matériau hybride sol-gel comme indiqué par la flèche F sur la figure 5.

Le motif de texturation que présente l'outil de texturation sur sa surface de moulage peut avoir été obtenu par différentes techniques de texturation qui sont parfaitement à la portée de l'homme du métier. A cet égard, on peut citer les techniques que sont la photolithographie, la lithographie optique par masque d'amplitude ou de phase, la lithographie par faisceau d'électrons, la lithographie interférentielle, la lithographie à nanosphère/microsphère, la lithographie par nano-impression (aussi connue sous la dénomination anglophone « Nano lmprint Lithography » et son acronyme « NIL »). Par exemple, la lithographie électronique est une technologie connue et appropriée pour la réalisation de nano-structurations entre 10 nm et quelques dizaines de micromètres sur un moule maître, notamment un moule maître en silicium. La technique du NIL présente l'avantage de reproduire des motifs obtenus de façon complexe par d'autres moyens de lithographie, plus rapidement et à une échelle très fine de l'ordre de 10 nanomètres. En d'autres termes, il est parfaitement à la portée de l'homme du métier de disposer d'un moule maître tel que décrit ci-dessus qui présente une surface de moulage comportant au moins un motif de texturation. Les matériaux et les techniques de réalisation de motifs de texturation décrits ci-dessus sont des exemples donnés à titre d'illustration qui ne limitent pas la portée de l'invention. En effet, d'autres matériaux et d'autres techniques permettant d'obtenir un moule maître dont une surface de moulage présente au moins un motif de texturation pourraient parfaitement être envisagés. Dans un mode de réalisation de l'invention, l'outil de texturation comprend sur sa surface de moulage un motif de texturation dont les dimensions sont de quelques nanomètres à quelques dizaines de micromètres. Ces dimensions vont dépendre des propriétés recherchées de la texturation souhaitée. L'outil de texturation 2 peut être réalisé en silicone. Le silicone peut être du Sylgard 184 commercialisé par la société DOW CORNING. Lorsque l'outil de texturation est en silicone, cela présente l'avantage que la surface de moulage peut comprendre des motifs en texturation en deux dimensions, mais aussi en 2,5 et 3 dimensions. L'outil de texturation en silicone peut avoir été fabriqué à partir d'un premier moule, par exemple un moule en silicium, qui présente une surface de moulage comportant au moins un motif de texturation. Dans ce mode de réalisation, la surface de moulage de l'outil de texturation en silicone présentera un motif de texturation qui sera donc le négatif du motif de texturation de la surface de moulage de ce premier moule, par exemple du moule en silicium, et l'insert selon l'invention obtenu à partir de cet outil de texturation en silicone présentera sur sa surface de moulage un motif de texturation qui sera identique à celui dudit premier moule (par exemple du moule en silicium).

La septième étape 107 concerne une étape de réticulation de la couche de matériau hybride sol-gel. Les caractéristiques (températures, pression, durée, UVs, etc...) de l'étape 107 de réticulation du matériau hybride sol-gel peuvent être similaires aux caractéristiques de l'étape 103 de réticulation de la résine.

La figure 6 représente le résultat obtenu à l'issue de l'étape 107.

La huitième étape 108 concerne le retrait ou démoulage de l'outil de texturation 2 hors de la cavité 3a pour fournir l'insert 1 présenté sur la figure 1.

D'autres procédés de fabrication peuvent être utilisés, notamment pour les deuxième et troisième modes de réalisation de l'insert 1. La céramique peut par exemple être déposée par l'un des procédés suivants :
- Dépôt physique par phase vapeur (« Physical Vapor Deposition (PVD) » or « sputtering » en anglais),
- Dépôt chimique en phase vapeur (« Chemical Vapor Deposition (CVD) » en anglais),
- Dépôt de couches atomiques (« Atomic Layer Deposition (ALD)en anglais),
- évaporation thermique ou,
- faisceau d'electrons.

Le motif de texturation peut être obtenu par lithographie ultraviolet (UV), photolithographie par masque d'amplitude ou de phase, écriture laser directe, faisceau d'électrons ou tout autre technique connue de l'homme du métier. La résine est ensuite développée. Alternativement, une gravure directe de la céramique peut être réalisée par faisceau d'ions focalisés (« Focused Ion Beam » en anglais), par gravure ionique réactive (« Reactive Ion Etching » en anglais) ou gravure par faisceau ionique (« Ion Beam Etching » en anglais).

La présente invention concerne également un procédé de fabrication d'une pièce en matériau polymérique nano-structuré.

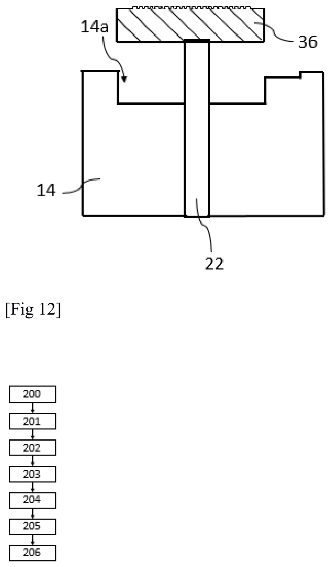

La figure 12 représente un organigramme des étapes d'un tel procédé de fabrication.

Le procédé de fabrication comprend une étape préliminaire 200 de fourniture d'un dispositif de moulage 10 tel que décrit précédemment, par exemple le dispositif de moulage 10 représenté sur la figure 7. Le dispositif de moulage 10 comprend notamment un insert 1 tel que décrit précédemment.

La première étape 201 concerne le positionnement d'un insert 1 tel que décrit précédemment à partir de la figure 1 dans le logement 12a du moule 12 du dispositif de moulage comme représenté sur la figure 7. L'insert 1 est par exemple obtenu par le procédé de fabrication décrit précédemment à partir des étapes de la figure 2.

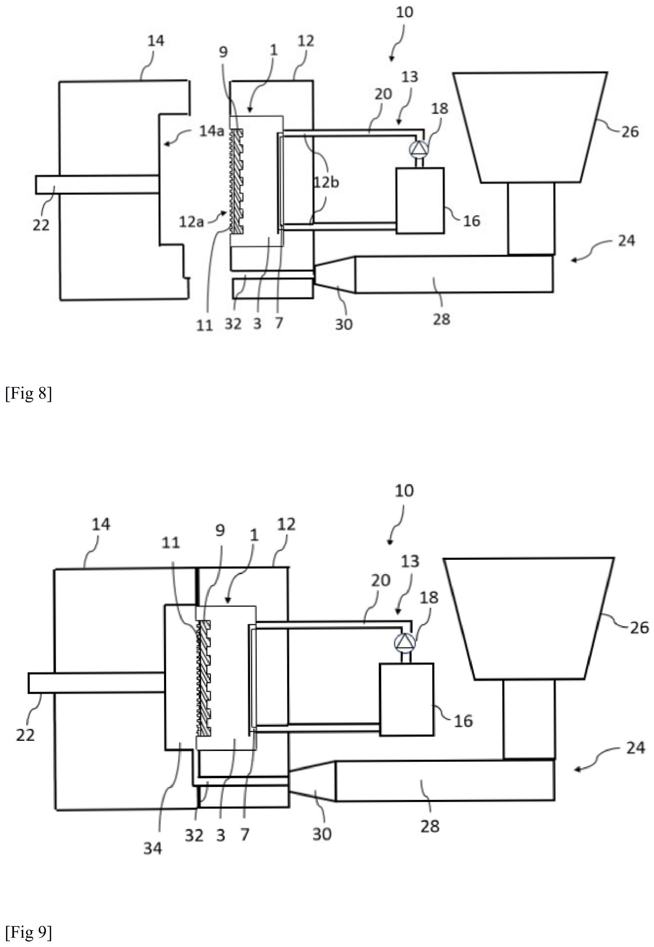

La deuxième étape 202 concerne l'assemblage du contre-moule 14 et du moule 12 pour former une cavité d'injection 34 dans laquelle s'étend la troisième partie 11 de l'insert 1 comprenant le motif de texturation comme représenté sur la figure 8. L'assemblage du contre-moule 14 et du moule 12 est par exemple réalisée par des vis.

La troisième étape 203 concerne l'injection de polymère fondu via le dispositif d'alimentation 24. Le polymère inséré dans la trémie 26 est chauffé pour être fondu et est injecté dans la cavité d'injection 34 par le biais du piston 28. Le volume de polymère fondu injecté correspond au volume de la cavité d'injection 34. Le polymère fondu rempli ainsi l'ensemble de la cavité d'injection 34 et notamment les nanostructures ou microstructures de la troisième partie 11 de l'insert 1 comme représenté sur la figure 9. Durant cette étape d'injection, la cavité d'injection peut être chauffée à une température prédéterminée, par exemple comprise entre 50°C et 70°C.

Du fait de la faible conductivité thermique de la résine dont est constituée la deuxième partie 9 de l'insert 1, le refroidissement du matériau polymérique lors de l'injection est ralenti de sorte que le matériau polymérique en fusion ne se fige pas prématurément avant d'avoir rempli les cavités du motif de texturation de la surface de moulage de la troisième partie 11 de l'insert 1. Cela garantit une excellente qualité de la duplication du motif de texturation, et ce même si ce motif de texturation est à l'échelle nanométrique.

Cela permet également de s'affranchir de l'effet bilame que pourrait produire la première partie 3 formant le contre-moule, notamment lorsque cette première partie 3 est en acier. L'effet bilame est un phénomène thermique qui intervient lorsque deux lames d'un matériau, par exemple d'un matériau polymérique, ayant des dilatations ou des retraits différents sont solidarisées. Le retrait d'un matériau polymérique est lié à sa vitesse de refroidissement.

Plus la solidification du matériau polymérique aura été rapide, moins il y aura de retrait. Un matériau polymérique injecté au cours d'un procédé de moulage par injection se comporte comme un bilame dans sa phase de refroidissement. En effet, il se produit un effet de peau lorsque le matériau polymérique en fusion entre en contact avec le moule et le contre-moule du dispositif de moulage. Cet effet de peau augmente progressivement pendant toute la phase de remplissage du moule et du contre-moule et lors du refroidissement, et ce jusqu'à la solidification complète du matériau polymérique. L'effet de peau correspond à la solidification quasi-instantanée des surfaces du matériau polymérique en contact respectivement avec le moule et le contre-moule dès l'injection du matériau polymérique en fusion. C'est pourquoi, il se forme deux peaux (ou autrement dit deux lames). L'ampleur de cet effet de peau se caractérise par l'importance des épaisseurs des peaux formées. Pendant le refroidissement, les deux peaux en cours de solidification vont donc rigidifier la paroi du matériau polymérique en fusion qui a été injecté et vont modifier le retrait dans l'épaisseur de ce matériau polymérique.

Si le moule et le contre-moule ne sont pas stabilisés à une même température au cours d'un procédé de moulage par injection, ce qui est généralement le cas pour les dispositifs de moulage dans lesquels le moule et le contre-moule ne sont pas réalisés en un matériau identique, les peaux formées ne sont pas identiques. La peau est plus fine sur la surface du matériau polymérique qui était en contact avec la partie du dispositif de moulage (moule ou contre-moule) dont la température de stabilisation était la plus élevée. La peau étant plus fine, elle est moins rigide, et ainsi l'épaisseur du matériau polymérique demeurant en fusion est plus épaisse ce qui nécessite plus de temps pour la refroidir et qui induit un retrait plus important.

Par conséquent, la déformation de la pièce en matériau polymérique ainsi obtenue est plus importante du côté qui était en contact avec la partie du dispositif de moulage dont la température de stabilisation est la plus élevée. C'est pourquoi, lorsque le moule et le contre-moule ne sont pas stabilisés à une même température au cours d'un procédé de moulage par injection, les épaisseurs des deux peaux (ou autrement dit des deux lames) du matériau polymérique injecté ne sont pas identiques. Cela a pour conséquence que le retrait n'est pas symétrique dans l'épaisseur dudit matériau polymérique et induit donc une déformation de la pièce en matériau polymérique obtenue à l'issue du moulage par injection.

Dans l'insert 1 décrit précédemment, bien que la surface de moulage de l'insert 1 ne soit pas réalisée en acier mais en un matériau hydride sol-gel, présente une température de stabilisation au cours d'un procédé de moulage par injection quasi-identique à celle du contre-moule réalisé en acier, de sorte que les retraits du matériau polymérique sont symétriques du côté du moule et du contre-moule réalisé en acier. Ainsi, la pièce moulée obtenue ne présente pas de déformation. En d'autres termes, les inventeurs ont mis au point un insert qui, bien que comportant une surface de moulage réalisée en un matériau hybride sol-gel, n'induit pas d'effet bilame lorsqu'il est utilisé dans un dispositif de moulage avec un contre-moule en acier.

L'insert 1, de par ses trois parties, permet d'obtenir, de manière fiable et précise, des pièces injectées présentant en surface des motifs de texturation d'excellente qualité qui correspondent parfaitement, par complémentarité de formes, à la surface de moulage dudit insert, et ce même à l'échelle nanométrique, du fait que sa surface de moulage est réalisée par un hybride sol-gel déposé sur une résine qui évite que ne se produise l'effet de peau au cours de l'injection en fusion du matériau polymérique.

La quatrième étape 204 concerne le refroidissement du polymère fondu pour permettre son durcissement. La chaleur est évacuée via le moule 12 et le contre-moule 14 ainsi que par l'insert 1, notamment via le dispositif de refroidissement 13 de l'insert 1.

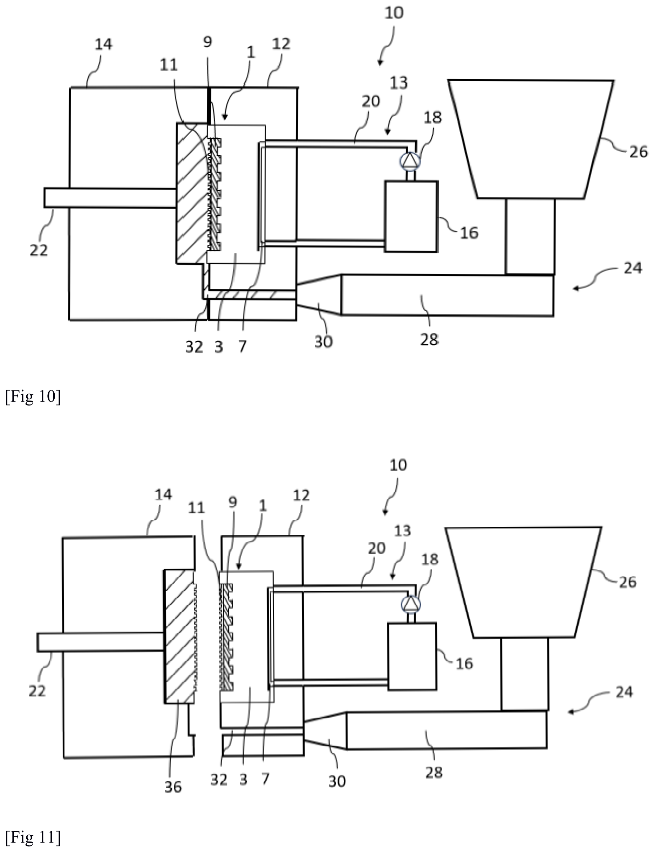

La cinquième étape 205 concerne le désassemblage du contre-moule 14 et du moule 12 comme représenté sur la figure 10.

La sixième étape 206 concerne le démoulage ou l'éjection de la pièce en matériau polymère 36 obtenue par le procédé d'injection. Cette éjection est par exemple réalisée via le dispositif d'éjection 22 en poussant le piston vers la cavité 14a pour libérer la pièce en matériau polymère 36 comme représenté sur la figure 11.

Un tel procédé de fabrication de pièces en matériau polymère permet donc d'obtenir aisément une pièce en matériau polymère comprenant des nanostructures afin de lui conférer des propriétés fonctionnelles particulières.

De plus, un tel insert 1 peut parfaitement être utilisé pour l'injection de séries supérieures à 10 000 pièces. Autrement dit, la durée de vie de l'insert 1 est allongée par rapport à celle d'inserts réalisés en matériau thermoplastique connus de l'état de l'art.

L'utilisation d'un tel insert 1 s'intègre parfaitement dans les procédés industriels classiques de plasturgie par injection de matériau polymérique, et ce sans nécessiter de modifier les installations et dispositifs industriels, ainsi que les paramètres des étapes d'injection du matériau polymérique. En effet, cet insert 1 ne nécessite pas de modifier les cycles d'injection de pièces en matériau polymérique qui sont habituellement utilisés dans ce domaine de la plasturgie.

L'utilisation d'un tel insert 1 est donc parfaitement rentable d'un point de vue industriel.

Le dispositif de moulage décrit précédemment peut être utilisé pour réaliser par moulage par injection des pièces en matériau polymérique présentant en surface au moins un motif de texturation, de préférence un motif de texturation à l'échelle micrométrique ou nanométrique.

Les pièces peuvent être destinées à des applications très variées, parmi lesquelles on peut par exemple citer :
- les hologrammes dans le domaine de l'étiquetage pour améliorer la traçabilité et éviter la contrefaçon,
- les pièces présentant des surfaces autonettoyantes et super-hydrophobes,
- les dispositifs biomédicaux, en particulier les circuits de microfluidique permettant d'obtenir notamment laboratoires sur puce (« lab-on-chip » en anglais) ou des organes sur puce (« organ-on-chip » en anglais). L'insert présente par exemple des motifs négatifs de microcanaux (de quelques µm à quelques centaines de µm) dont le sommet peut lui-même comprendre des motifs de taille inférieure à la taille des microcanaux pour texturer le fond des microcanaux et leur fournir une propriété particulière comme par exemple une propriété hydrophobe ou hydrophile ou un substrat favorisant la croissance cellulaire.
- les pièces en matériau polymériques pour des articles de consommation tels que des pièces d'emballage, notamment d'emballage de produits cosmétiques, alimentaires, de papeterie ou encore des jouets,
- la plastronique,
- l'optique diffractive ou réfractive, notamment des réseaux de diffraction pour des fréquences de 10⁹ à 10¹⁴Hz.
- les métasurfaces et les métamatériaux.

Ainsi, l'utilisation d'un insert 1 en trois parties selon la présente invention dans un procédé de moulage par injection présente l'avantage de s'affranchir de certains moyens tels que l'injection sous vide, le cyclage thermique avec une augmentation plus ou moins importante de la durée du cycle, le chauffage par induction électromagnétique, qui peuvent être mis en œuvre pour pallier différents problèmes tels que l'effet de peau qui surviennent avec d'autres outillages de moulage connus de l'état de l'art. De plus, un tel insert 1 permet d'obtenir une texturation des pièces en matériau polymérique de dimension nanométrique.

## Revendications

1. Insert (1) pour dispositif de moulage par injection pour la fabrication de
pièces en matériau polymérique comprenant :
- une première partie (3) réalisée en matériau métallique comprenant une cavité (3a)
- une deuxième partie (9) réalisée en résine thermodurcissable configurée pour être positionnée dans la cavité (3a) de la première partie (3) et en contact avec un fond de la cavité (3),
**caractérisé en ce que** l'insert (1) comprend également :
- une troisième partie (11) configurée pour venir se positionner dans la cavité (3a) de la première partie (3) et sur la deuxième partie (9), ladite troisième partie (11) comprenant une surface de moulage comprenant un motif de texturation et étant réalisée dans l'un des matériaux suivants :
- une résine thermodurcissable présentant un taux de retrait inférieur à celui de la résine thermodurcissable de la deuxième partie (9) ou,
- un matériau céramique.

2. Insert (1) selon la revendication précédente dans lequel le motif de texturation comprend des microstructures ou nanostructures.

3. Insert (1) selon l'une des revendications précédentes dans lequel la troisième partie est réalisée en matériaux hybrides organiques-inorganiques.

4. Insert (1) selon l'une des revendications précédentes dans lequel la résine thermodurcissable de la deuxième partie (9) et l'éventuelle résine thermodurcissable de la troisième partie (11) ont une température de transition vitreuse supérieure ou égale à 150°C.

5. Insert (1) selon la revendication 1 ou 2 dans lequel le matériau céramique de la troisième partie est réalisée par un carbure ou un nitrure, un oxyde, un oxynitrure, un oxycarbure ou un carbonitrure.

6. Insert (1) selon l'une des revendications précédentes dans lequel la troisième partie en résine thermodurcissable ou en céramique comprend un dépôt métallique de surface.

7. Insert selon l'une des revendications précédentes dans lequel l'épaisseur de la troisième partie (11) est comprise entre 100nm et 1mm.

8. Insert (1) selon la revendication précédente dans lequel la résine thermodurcissable de la deuxième partie (9) est une résine époxy.

9. Insert (1) selon l'une des revendications précédentes dans lequel le fond de la cavité (3a) de la première partie (3) comprend des plots (5) configurés pour solidariser la première partie (3) et la deuxième partie (9) par accroche mécanique et pour maximiser la surface d'échange thermique entre la première partie (3) et la deuxième partie (9).

10. Dispositif de moulage (10) par injection de pièces en matériau polymérique, **caractérisé en ce qu'**il comprend au moins un insert (1) selon l'une quelconque des revendications précédentes et un moule (12) configuré pour recevoir le, au moins un, insert (1).

11. Dispositif de moulage (10) selon la revendication précédente comprenant également un dispositif de refroidissement (13) de l'insert (1) configuré pour transférer de la chaleur en dehors de l'insert (1).

12. Procédé de fabrication d'un insert (1) selon la revendication 3 comprenant les étapes suivantes :
- on coule (103) une résine thermodurcissable (9) dans une cavité (3a) d'un support métallique (1),
- on réticule (104) la résine thermodurcissable (9),
- on coule (105) une couche de matériau hybride sol-gel (11) sur la résine thermodurcissable réticulée (9),
- on applique (106) un outil de texturation (2) comprenant des microstructures ou nanostructures sur une surface supérieure de la couche de matériau hybride sol-gel (11),
- on réticule (107) la couche de matériau hybride sol-gel (11).

13. Procédé de fabrication selon la revendication précédente dans lequel les étapes de réticulation (104, 106) sont réalisées par voie thermique ou par photopolymérisation.

14. Procédé de fabrication d'une pièce en matériau polymérique comprenant
les étapes suivantes :
- une étape (200) de fourniture d'un dispositif de moulage (10) selon la revendication 10,
- une étape (203) d'injection de matériau polymérique dans une cavité du dispositif de moulage (10) comprenant un insert (1) selon l'une des revendications 1 à 9,
- une étape (204) de refroidissement du polymère injecté,
- une étape (206) de démoulage ou d'éjection de la pièce en matériau
polymérique.

15. Procédé de fabrication selon la revendication 14 **caractérisé en ce que** la pièce en matériau polymérique est comprise dans la liste suivante :
- un dispositif optique,
- une métasurface,
- un circuit de microfluidique,
- un hologramme.
